# EUROPEAN PATENT APPLICATION

(11) **EP 2 369 494 A1**
(43) Date of publication of application: **28.09.2011**
(21) Application number: 09834036.7
(22) Date of filing: 08.09.2009
(51) Int. Cl.: G06F 17/30

(54) **WEB APPLICATION BASED DATABASE SYSTEM AND DATA MANAGEMENT METHOD THEROF**

(30) Priority: 23.12.2008 CN 200810241848
(71) Applicant: ZTE Corporation, Shenzhen, Guangdong 518057 (CN)
(72) Inventor: WANG, Fenglai, Guangdong 518057 (CN); YU, Tao, Guangdong 518057 (CN); WANG, Ruiping, Guangdong 518057 (CN)
(74) Representative: Jansen, Cornelis Marinus
(86) International application number: PCT/CN2009/073815
(87) International publication number: WO 2010/072083

(57) **Abstract**

A database system based on a WEB application includes a database server (103) accessed by means of reading and writing a disk and a distributed memory database server (11), wherein the distributed memory database serve performs data synchronized with data read from the database server by a data synchronizing module (111); the distributed memory database server further includes a memory database Manager server (104) and more than one memory database Agent servers (105), wherein the memory database manager server performs uniform dispatch of memory resources, realizes the data synchronization between the database server and the distributed memory database, and provides the WEB application server (102) with a data access interface; and the memory database agent servers store specific data.

## Description

### Field of the Invention

The present invention relates to a database system based on a WEB application and a data management method thereof, in particular to a distributed memory database system and the usage of operation method thereof on WEB applications.

### Background of the Invention

A WEB application is intended to provide information and service to users, as a main body of a network, and instantaneity in its data response and extensibility are key indices of system performance. The so called instantaneity refers to the speed of the WEB server responding to a user. The so called extensibility refers to the capability that the WEB application keeps its performance constant while the number of concurrent users increases.

In a database system, the I/O speed of a disk is the major factor limiting the system processing speed. With the increase of the concurrent users, the times of the WEB server accessing the database server increases, and the data volume being accessed increases as well. When the number of the concurrent users exceeds a certain amount, the WEB server possibly fails to connect with the database.

The distributed memory database technology incorporates the advantages of both distributed technology and memory database, so as to enable users to utilize transparently the memory resource among a LAN (Local Area Network). Because the speed of accessing the memory resource is much greater than the disk operation speed of a common database software, so that not only the memory resource among a LAN can be shared, but also the efficient data management and storage can be realized.

A conventional WEB application performs direct data interaction with a database, and each access corresponds to one time of disk I/O operation, so that a bottle neck will absolutely occur to the system processing when the number of concurrent users increases. The memory database operates the memory of a server, so that the access speed of the memory resource is much greater than the disk operation speed of the common database. A distributed memory database may allow that a plurality of users of different hosts to access a buffer system simultaneously, thus not only the shortcoming of memory only being shared in a single computer is solved, but also the pressure of searching the database is reduced.

### Summery of the Invention

An object of the present invention is to disclose a distributed memory database system based on a WEB application and an operation method thereof, which is used to solve the problems of a WEB application having non-timely response and lower performance and system capability neck bottle, which are resulted from a great number of concurrent access and a mass of data in current B/S (Browser/Server) architecture.

According to one aspect of the present invention, a database system based on a WEB application is provided.

The database system based on a WEB application according to the present invention, which supports a WWW user terminal (101) to access the database system by control of a WEB application server (102), comprises a database server (103) accessed by means of reading and writing a disk and a distributed memory database server (11), wherein the distributed memory database server (11) performs data synchronization with data read from the database server (103) by a data synchronization module of the distributed memory database server (11); and the distributed memory database server (11) further comprises a memory database manager server (104) and one or more memory database agent servers (105), wherein the memory database manager server (104) is adapted to perform uniform dispatch of memory resource, realize the data synchronization between the database server (103) and the distributed memory database (11), and provide the WEB application server (102) with a data access interface; and the memory database agent server(s) (105) is adapted to store specific data.

The database system based on a WEB application disclosed by the present invention further comprises the following dependant technical features.

The distributed memory database server (11) further comprises following modules which are in coordination with each other:
a heartbeat module, adapted to detect link(s) between the memory database manager server (104) and the memory database agent server(s) (105), and report state information to the memory database agent server(s) (105) periodically;
a dispatch module, used for the memory database manager server (104) to perform uniform dispatch on the resource of the memory database agent server(s) (105) according to the state information reported by the heartbeat module;
a data synchronization module, adapted to monitor use state of data, and configure the data synchronized to the memory database agent server (105); and
a data access module, used for the memory database manager server (104) to provide an interface to the WEB application server (102) to access data.

The distributed memory database server (11) supports the querying of required particular data by performing synchronization on database table(s) requested by a user.

The data synchronization module performs synchronization on data which is frequently used and complexly processed, and performs selective synchronization on data which is less frequently used and less complexly processed.

The data synchronization module sets a corresponding flag bit for the database table(s) to record use frequency of the database table(s) or time span between the current use and the previous use, and deletes according to the flag bit the database table(s) with a low use frequency and the time span between the current use and the previous use exceeding a time span limit.

The data synchronization module periodically detects whether the database table(s) of the memory database agent server(s) (105) is consistent with the corresponding database table(s) of the database server (103) wherein if inconsistent, it updates the memory database agent server(s) (105).

The distributed memory database (11) provides a data update interface wherein when a change occurs to the database table(s) of the database server (103), the data update interface is called to modify the corresponding database table(s) of the memory database agent server(s) (105).

According to another aspect of the present invention, a data management method for a database system based on a WEB application is provided.

The data management method for a database system based on a WEB application according to the present invention supports a WWW user terminal (101) accessing the database system by control of a WEB application server (102); the WEB application server (102) synchronizes to a distributed memory database server (11) the data of a database server (103) having received a user request; and a memory database manager server (104) of the distributed memory database server (11) uniformly dispatches memory resource, stores the synchronized particular data in one or more memory database agent servers (105), and provides a data access interface to the WEB application server (102) for severing data request by subsequent users.

The data management method for a database system based on a WEB application according to the present invention further comprises the following dependant technical features.

The memory database manager server (104) periodically detects link(s) between the memory database manager server (104) and the memory database agent server(s) (105); and the memory database manager server (104) uniformly dispatches the resource of the memory database agent server(s) (105) according to link state information therebetween.

The step of that the memory database manager server (104) uniformly dispatches the resource of the memory database agent server(s) (105) is: data of the distributed memory database server (11) is stored distributedly among a plurality of background server nodes, the memory database manager server (104) monitors operation state of each node in real time, wherein when a server node has multifunction, the data is automatically dispatched and transferred to other database node(s).

In the distributed memory database system based on the WEB application and the operation method thereof disclosed by the present invention, the memory database is employed to increase the instantaneity of data response and extensibility of the WEB application, to reduce the communication volume of direct interaction between the WEB application server and the database server, to decrease times of I/O reading and writing disk. By using the memory database manager server to uniformly dispatch the memory database agent server(s), load balance of the memory database is realized.

Other features and advantages of the present invention will be described in the following specification, and partly obvious from the specification, or can be understood by implementing the present invention. The purposes and other advantages can be achieved and obtained by the structure specified in the specification, claims and drawings.

### Brief Description of the Drawings

Accompanying drawings are provided for further understanding of the present invention and form a part of the specification, which are used to explain the present invention with embodiments of the present invention rather than limit the present invention. In the accompanying drawings:
Fig. 1 is a structural schematic diagram of a WEB application system of the present invention;
Fig.2 is a structural schematic diagram of a distributed memory database of the present invention;
Fig.3 is a flow chart of an operation method of a distributed memory database based on a WEB application of the present invention; and
Fig.4 is a flow chart of updating the data of a memory database of the present invention.

### Detailed Description of the Embodiments

The present invention will be further described in connection with drawings and embodiments.

Considering the problems resulted from a great number of concurrent users in a WEB application, the present invention provides a realization method and system of a distributed memory database based on a WEB application to increase data access speed, wherein the distributed structure provides the system with a higher extensibility.

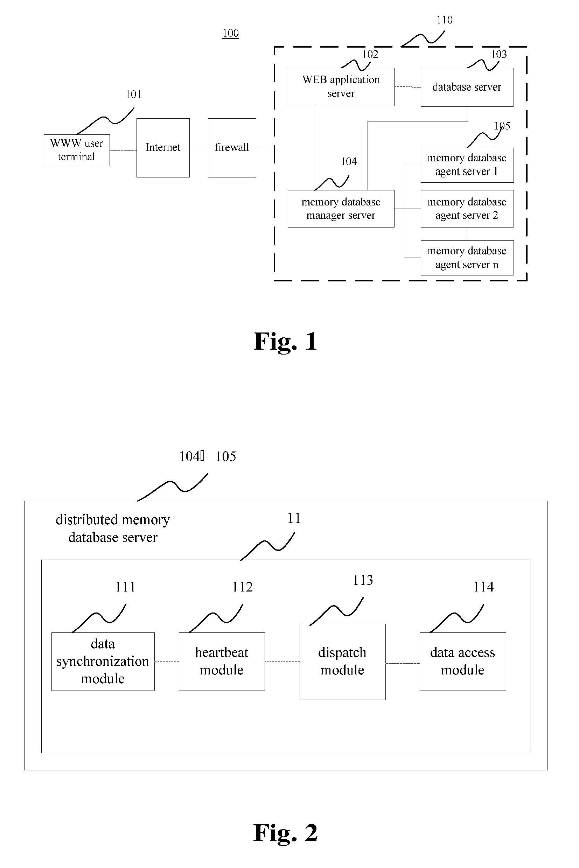

Reference is made to Fig. 1 which is a structural schematic diagram of a WEB application system.

The WEB application system 100 employs a browser/server (B/S) architecture, wherein a WWW user terminal 101 connects to Internet via a corresponding access device. A server end comprises a WEB application server 102, a database server 103, a memory database manager server 104, and a memory database agent server 105. The WEB application server 102 provides functions, such as media navigation, information query, to the user terminal based on technologies, such as WEB technology, WAP technology and so on. Normally, the WWW user terminal 101 accesses a navigation page of the WEB application system, by browsers such as a WEB, a WAP and etc., to look for the content interested, experience services provided by the WEB application system, and realize addition, deletion, or update of data of the database server of the WEB application system.

When the WWW user terminal 101 logs in the WEB application server 102 and initiate an operation request, the WEB application server 102 receives the request and reads the data of the database server 103 in real time according to the request.

The combination of the memory database manager server 104 and the memory database agent server 105 in Fig. 1 is a distributed memory database server 11, wherein the memory database manager server 104 performs uniform dispatch of memory resource, and provides a data access interface for the WEB application server 102. It can be configured to have a plurality of the memory database agent servers 105 for storing specific data. Herein, the purpose of utilizing a distributed memory database is to increase the access speed. For the altered data, the distributed memory database server is only responsible for synchronization and the WEB application server 102 directly updates the data of the database server 103.

The distributed memory database server 11 performs data synchronization on the data read from the database server 103 by the WEB application server 102, i.e., the database table(s) requested by a user is synchronized to the distributed memory database agent server(s) 105, the specific data desired is queried in the distributed memory database agent server(s) 105.

A structural schematic diagram of the distributed memory database server 11 is shown in Fig.2, which comprises a data synchronization module 111, a heartbeat module 112, a dispatch module 113, and a data access module 114.

The data synchronization module 111 is adapted to compare the difference between the database server 103 and the data in the distributed memory database, and synchronize the data to be added, modified, and deleted. The heartbeat module 112 is adapted to perform heartbeat verification between the memory database manager server and the memory database agent server in the distributed memory database server 11, to detect the state of the link(s) between them, and acquire resource information of the memory database agent server(s). The data access module 114 is used for the distributed memory database server 11 to provide an interface for the WEB application server 102 accessing data. The data synchronization module 111 of the distributed memory database server 11 sets a data configuration policy, a data deletion policy, and a data update policy. The distributed memory database server 11 performs addition, deletion and update on the each memory database according to the above policies.

In the above, the data configuration policy is used for adding a database table to the distributed memory database, and can be dynamically adjusted according to the demand of the WEB application system. The database table(s), frequently used in the WEB application system and frequently called in the request initiated by users, is read to the distributed memory server 11 through one I/O operation on the database server 103. When a subsequent user initiates a request for calling the database table(s), it can be read directly from the distributed memory server 11, without repeating the I/O operation on the database server 103.

After the distributed memory database starts, the data synchronization module 111 reads the required data of the database table(s) according to the data configuration policy, and writes it into the memory database agent server(s) 105 via the dispatch module 113.

The data deletion policy employs the least recently used (LRU) principle, that is to say, the data deletion policy is correspondingly provided with a lower limit of use frequency or a time span limit between current use and the previous use. The data synchronization module monitors data use frequency and deletes the database table(s) with a low use frequency and/or the time span between current use and the previous use exceeding the time span limit. If a user accesses the data during this process, the data will be read from the database server directly.

The database update policy is used for keeping the synchronization between the memory database and the database server, wherein the synchronization comprises active synchronization mode and passive synchronization mode. The active synchronization mode means that the data synchronization module 111 of the distributed memory database server 11 initiates a timing update service program to periodically scan to determine whether the database table(s) of the memory database agent server(s) is consistent with the corresponding database table(s) of the database server 103. As for the database data which is altered in the database server 103, the memory database agent server(s) 105 is updated with the data of the database server 103. The passive synchronization mode means that the distributed memory database provides a data update interface wherein when the database table(s) of the database server changes, the data update interface is called to feedback the update result to the memory database agent server(s) 105.

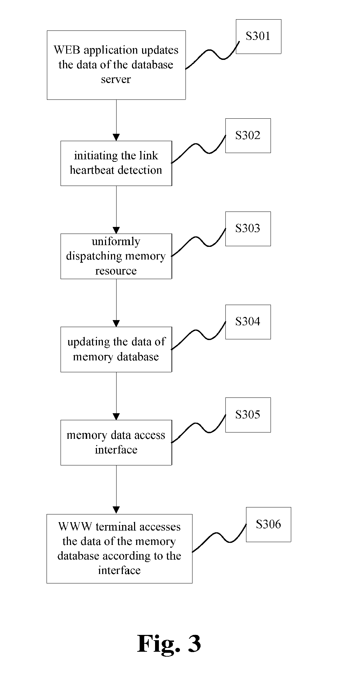

Fig.3 is a flow chart of an operation method for the distributed memory database based on the WEB application, which comprises the following steps.

Step 301, the WEB application server updates the data of the database server in real time, and completes addition, deletion and modification of the data of the database server.

Step 302, the memory database manager server initiates heartbeat detection on the link(s) to acquire the link state and resource information of the memory database agent server(s).

Step 303, the data synchronization module 111 provides the data to be synchronized to the memory database, and the memory database manager server performs uniform dispatch on the memory resource and allocates the above data to the memory database agent server(s) according to the result of the heartbeat module 112.

For the data to be added, the memory database manager server allocates the memory resource to it, and at the same time, saves the corresponding relationship between said data and the memory database agent server(s). For the data to be updated, the memory database manager server finds the record of said data according to the above corresponding relationship, and updates the data. For the data to be deleted, the memory database manager server finds the record of said data according to the above corresponding relationship, deletes the data, and deletes the corresponding relationship at the same time.

Step 304, the memory database agent server(s) provides a data synchronization interface and the memory database manager server calls the above synchronization interface according to the uniform dispatch result to synchronize the data of the database server to the memory database agent server(s).

Step 305, the data access module 114 provides a data access interface according to different index.

The user terminal has various demands on data, which possibly comprises sorting various indexes, making statistic processes and so on. The data access module 114 accesses the data of the memory database server according to each index package, so as to enable users to query data according to their requirements, and return the data satisfying a certain condition to the user terminal.

Step 306, the WWW user terminal uses the data access interface to initiate a data query request to the memory database manager server. The memory database manager server acquires the corresponding data according to the corresponding relationship between the memory database agent server(s) and the database table(s), and returns the acquired data to the user terminal.

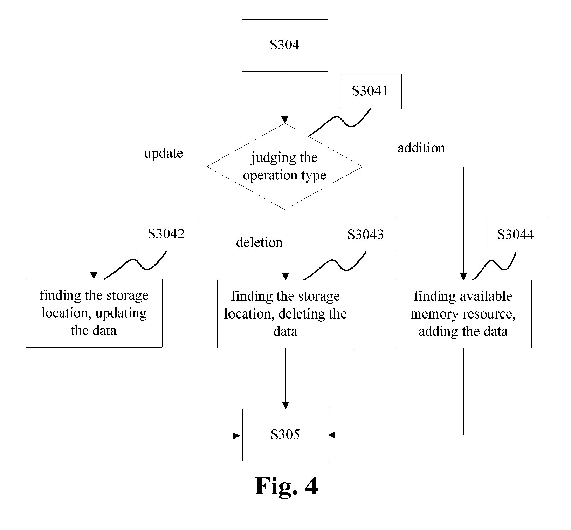

Fig.4 is a flow chart of updating the data of the memory database of the present invention. The following steps can be further comprised between Step 304 and Step 305 in Fig.3.

Step 3041, the operation to be performed currently is determined according to the data update policy, the data deletion policy and the data configuration policy, wherein if determined as the update operation, Step 3042 is executed; if determined as the deletion operation, Step 3043 is executed; and if determined as the addition operation, Step 3044 is executed.

Step 3042, for the data to be updated, the corresponding relationship between the memory database agent server(s) and the database table(s) is found to acquire corresponding data to update.

Step 3043, for the data to be deleted, the corresponding relationship between the memory database agent server(s) and the database table(s) is utilized to acquire corresponding data to delete, and delete the corresponding relationship at the same time.

Step 3044, for the data to be added, available memory resource is found according to the dispatch result, and the data is added to the memory database agent server(s), and the corresponding relationship between the data and the memory database agent server(s) is saved.

Compared with the conventional WEB application server which directly accesses to a database server, the distributed memory database technology has the following advantages.
1. It is realized that the memory database is distributedly stored among a plurality of background server nodes and the distributed memory database system monitors the operation state of each node in real time, wherein when a certain server node has malfunction, the system performs the automatic dispatch to transfer data to other database nodes, so as to enhance system stability.
2. The directly interactive communication volume between the WEB application server and the database server is decreased so as to reduce disk I/O read-write times and improve the system processing efficiency.

Obviously, in the present invention, the mode of exchanging space for time is used, to increase the instantaneity of data response and extensibility of the WEB applications.

Certainly, the present invention has various other embodiments. Alterations and variations can be made by those skilled in the art without departing from the spirit and essence of the present invention, and shall be fallen into the scope of the appended claims of the present invention.

The present invention provides an operation method of a distributed memory database based on a WEB application, which is used for a WEB application system comprising a WEB application server and a database server. The method comprises the following steps.

Step 1, one or more memory database agent servers is provided.

Step 2, a memory database manager server is provided to uniformly dispatch the memory database agent server(s).

Step 3, the data of the database server is synchronized to the memory database agent server(s) by the memory database manager server according to a data synchronization policy.

Step 4, the memory database manager server provides a data access interface.

The above Step 1 further comprises: the memory database agent server(s) and the memory database manager server keep a heartbeat message to report system resource information, such as, memory resource, CPU occupation rate and etc., to the memory database manager server periodically.

The above Step 2 further comprises: the memory database manager server manages the system resource information of the memory database agent server(s), and uniformly dispatches the memory database agent server(s) according to the system resource information.

The above Step 3 further comprises: the memory database manager server scans to determine whether the memory database agent server(s) is consistent with the corresponding data of the database server in a manual mode or a periodical mode, and updates the memory database agent server(s) with the altered data of the database server.

The above Step 4 further comprises: the memory database manager server provides a data access interface, and when the WEB application server requests to access data, the memory database manager server reads data from the memory database agent server(s) and returns it to the WEB application server.

Between Step 3 and Step 4, it further comprises: the memory database manager server records information, such as state, data storage address and etc., of each memory database agent server. When the WEB application server requests data, the memory database manager server acquires corresponding data according to the information and returns the data to the WEB application server.

The present invention also discloses a distributed memory database system based on a WEB application, which is used for a WEB application system including a WEB application server and a database server. The distributed memory database system comprises:
a heartbeat module, which is adapted to detect link(s) between a memory database manager server and memory database agent server(s);
a dispatch module, which is used for the memory database manager server to perform uniform dispatch on resource of the memory database agent server(s);
a data synchronization module, which is adapted to monitor use state of database data, and synchronize the data of the database server to the memory database agent server(s);
a data access module, which is used for the memory database manager server to provide an interface to the WEB application server to access data.

The memory database agent server(s) of the above heartbeat module reports the state information periodically.

The above dispatch module sets the memory database agent server(s) used for dispatch, and uniformly dispatches the resource of the memory database agent server(s) according to the state information reported by the heartbeat module.

The above data synchronization module sets the synchronization policy, and synchronizes the data of the database server to the memory database agent server(s) as required. The synchronization policy means that the data which is frequently used and complexly processed is synchronized, and the database data which is less frequently used and less complexly processed is selectively synchronized to limit the volume of synchronization data, so as to prevent too much resource from being occupied.

The above description is to illustrate the preferred embodiments not limit the present invention. Various alterations and changes of the present invention are apparent to those skilled in the art. The scope defined in claims shall comprise any modification, equivalent substitution and improvement in the spirit and principle of the present invention.

## Claims

1. A database system based on a WEB application, which supports a WWW user terminal (101) to access the database system by control of a WEB application server (102), **characterized in that**:
the database system based on a WEB application comprises a database server (103) accessed by means of reading and writing a disk and a distributed memory database server (11), wherein the distributed memory database server (11) performs data synchronization with data read from the database server (103) by a data synchronization module of the distributed memory database server (11); and
the distributed memory database server (11) further comprises a memory database manager server (104) and one or more memory database agent servers (105), wherein the memory database manager server (104) is adapted to perform uniform dispatch of memory resource, realize the data synchronization between the database server (103) and the distributed memory database (11), and provide the WEB application server (102) with a data access interface; and the memory database agent server(s) (105) is adapted to store specific data.

2. The database system based on a WEB application according to claim 1, **characterized in that** the distributed memory database server (11) further comprises following modules which are in coordination with each other:
a heartbeat module, adapted to detect link(s) between the memory database manager server (104) and the memory database agent server(s) (105), and report state information to the memory database agent server(s) (105) periodically;
a dispatch module, used for the memory database manager server (104) to perform uniform dispatch on the resource of the memory database agent server(s) (105) according to the state information reported by the heartbeat module;
a data synchronization module, adapted to monitor use state of data, and configure the data synchronized to the memory database agent server (105); and
a data access module, used for the memory database manager server (104) to provide an interface to the WEB application server (102) to access data.

3. The database system based on a WEB application according to claim 2, **characterized in that** the distributed memory database server (11) supports the querying of required particular data by performing synchronization on database table(s) requested by a user.

4. The database system based on a WEB application according to claim 2, **characterized in that** the data synchronization module performs synchronization on data which is frequently used and complexly processed, and performs selective synchronization on data which is less frequently used and less complexly processed.

5. The database system based on a WEB application according to claim 2, **characterized in that** the data synchronization module sets a corresponding flag bit for the database table(s) to record use frequency of the database table(s) or time span between the current use and the previous use, and deletes according to the flag bit the database table(s) with a low use frequency and the time span between the current use and the previous use exceeding a time span limit.

6. The database system based on a WEB application according to claim 2, **characterized in that** the data synchronization module periodically detects whether the database table(s) of the memory database agent server(s) (105) is consistent with the corresponding database table(s) of the database server (103) wherein if inconsistent, it updates the memory database agent server(s) (105).

7. The database system based on a WEB application according to claim 6, **characterized in that** the distributed memory database (11) provides a data update interface wherein when a change occurs to the database table(s) of the database server (103), the data update interface is called to modify the corresponding database table(s) of the memory database agent server(s) (105).

8. A data management method for a database system based on a WEB application, which supports a WWW user terminal (101) accessing the database system by control of a WEB application server (102), **characterized in that**,
the WEB application server (102) synchronizes to a distributed memory database server (11) the data of a database server (103) having received a user request; and
a memory database manager server (104) of the distributed memory database server (11) uniformly dispatches memory resource, stores the synchronized particular data in one or more memory database agent servers (105), and provides a data access interface to the WEB application server (102) for severing data request by subsequent users.

9. The data management method for a database system based on a WEB application according to claim 8, **characterized in that**,
the memory database manager server (104) periodically detects link(s) between the memory database manager server (104) and the memory database agent server(s) (105); and
the memory database manager server (104) uniformly dispatches the resource of the memory database agent server(s) (105) according to link state information therebetween.

10. The data management method for a database system based on a WEB application according to claim 9, **characterized in that** the step of that the memory database manager server (104) uniformly dispatches the resource of the memory database agent server(s) (105) is: data of the distributed memory database server (11) is stored distributedly among a plurality of background server nodes, the memory database manager server (104) monitors operation state of each node in real time, wherein when a server node has multifunction, the data is automatically dispatched and transferred to other database node(s).
